# EUROPÄISCHE PATENTANMELDUNG

(11) **EP 1 693 132 A1**
(43) Veröffentlichungstag der Anmeldung: **23.08.2006**
(21) Anmeldenummer: 06002597.0
(22) Anmeldetag: 09.02.2006
(51) Int. Cl.: B23B 27/16, B23C 5/22, B23B 29/24, B23P 17/06, A47L 13/08, B02C 18/18, B44D 3/16, B23D 79/08

(54) **Anordnung zur Befestigung von Schneidplatten**

(30) Priorität: 19.02.2005 DE 102005007676
(71) Anmelder: MWS Schneidwerkzeuge GmbH & Co KG, 98574 Schmalkalden / Thüringen (DE)
(72) Erfinder: Tröger, Harmut, 98574 Schmalkalden / OT Asbach (DE); Reinhardt, Hermann, 98593 Floh - Seligenthal / OT Hohleborn (DE)

(57) **Zusammenfassung**

Die Erfindung betrifft eine Anordnung und eine Befestigung von Schneidplatten, für Schneidwerkzeuge.

Aufgabe der Erfindung ist es eine Anordnung und eine Befestigung von Schneidplatten zu entwickeln, die selbst für Werkzeuge mit großen Schneidenlängen geeignet ist, dabei eine optimale schnelle und gleichzeitig fertigungstechnisch einfache Verspannung der Schneidplatte mit dem Werkzeuggrundkörper ermöglicht und zudem die durch den Schneid- bzw. Zerspanungsprozess bedingten Schwingungen deutlich reduziert und gleichzeitig die Lebensdauer der Schneidplatte insgesamt wie auch die auf die Schneidenlänge bezogene Standzeit deutlich erhöht sowie die Herstellungs- und Instandhaltungskosten der Schneidwerkzeuge merklich senkt.

Erfindungsgemäß wird diese Aufgabe dadurch gelöst, dass die am Werkzeuggrundkörper (2) angeordnete/n Werkzeugschneide/n (5) jeweils von den Schneiden (6) mehrerer, nebeneinander auf einer gemeinsamen Auflagefläche (9) des Werkzeuggrundkörpers (2) angeordneten, Schneidplatten (1) gebildet wird/werden, wobei parallel zur Schneide (6), im Bereich der Befestigungsbohrung (19), in der Bodenfläche (7) jeder Schneidplatte (1) jeweils eine Nut (8) bzw. beidseitig der Befestigungsbohrung (19) am Rand der Schneidplatte (1) Nutsegmente (8A) angeordnet ist/sind, und am Werkzeuggrundkörper (2) auf der zugeordneten gemeinsamen Auflagefläche (9) der Schneidplatte/n (1) eine der Nut (8) / den Nutsegmenten (8A) zugeordnete, in ihrer Breite / Tiefe und Höhe gegenüber der Nutbreite / Nuttiefe und Nuthöhe der Schneidplatte/n (1) jedoch ein Arbeitsspiel aufweisende Führungsschiene (10) bzw. Führungsschienenabschnitte (10A) angeordnet ist / sind.

## Beschreibung

Die Erfindung betrifft eine Anordnung und eine Befestigung von Schneidplatten, für Schneidwerkzeuge, beispielsweise im Bereich der Metallverarbeitung, für Schneidwerkzeuge von Entsorgungs- und Recyclinganlagen, für Schneidwerkzeuge der Gewinnungs- und Aufbereitungsindustrie, der Papier- und Holzindustrie, der Medizintechnik aber auch für Schneidwerkzeuge in der Bau- und der Lebensmittelindustrie.

Im Stand der Technik sind in diesem Zusammenhang die unterschiedlichsten Schneidwerkzeuge vorbeschrieben.
So werden beispielsweise zur Herstellung von Stahlwolle, wie u.a. im DE GM 71 02 492 aber auch im DE GM 73 46 110 vorbeschrieben, in Haltern verstellbar gelagerte Messerplatten mit unterschiedlichen Riffelteilungen eingesetzt die entweder mit einer eingelöteten Hartmetallplatte oder auch mit einer über die Messerbreite eingeklemmten Hartmetallwendeplatte versehen sind. Jede der Messerplatten ist dabei jeweils in einem Messerhalter befestigt, wobei wie beispielsweise in der DE 19901441 C1 vorbeschrieben die Schneide der Messerplatte zur Drahtbewegung schwenkbar, pendelnd einstellbar ist.
Die erforderliche Verstellmöglichkeit bewirkt dabei zwangsläufig Instabilitäten welche sich negativ auf die Standzeit der Messerschneide auswirkten, wobei je weiter man von der "Stützmitte" abkommt, auch diese Instabilitäten welche als Schwingungen am Schneidmesser auftreten eine deutliche Verringerung der Standzeiten der Schneidengeometrie, insbesondere im Randbereich des Messers, zur Folge haben.
Bei Einsatz von Hartmetall erhöht sich die Ausbruchgefahr im Randbereich des Messers dadurch um ein Vielfaches.
Im Stand der Technik sind darüber hinaus auch Schneidwerkzeuge für die spanabhebende Bearbeitung bekannt, welche mit Hartmetallplatten ausgerüstet sind und die entweder in feststehenden Werkzeugen (beispielsweise beim Drehen) aber auch bei rotierenden Werkzeugen (beispielsweise beim Fräsen) eingesetzt werden.
So wird beispielsweise in der DE - PS 15 52 296 ein Schneidwerkzeug mit einer sehr fertigungs- und kostenintensiven Variante zur Befestigung einer Wendeschneidplatte vorbeschrieben.
Diese in der DE - PS 15 52 296 beschriebene Befestigungsvariante wird beispielsweise durch die in der DE 2906148 C2 vorgestellte Befestigung einer Wendeschneidplatte mit einem sich seitlich elastisch verformende Spannbolzens weiterentwickelt.
Zwar kann bei dieser Befestigungsvariante gemäß der DE 2906148 C2 die Wendeschneidplatte schnell gewechselt werden, die komplizierte Gestaltung des mit hoher Genauigkeit zu fertigenden Spannbolzens, wie auch die zusätzlichen Ausnehmungen im Halter erfordern jedoch zwangsläufig einen deutlich erhöhten Fertigungsaufwand, der sich dann in erhöhten Fertigungskosten niederschlägt.
In der DE 29 36 869 C2 und der DE 3037508 C2 werden weitere Befestigungsvariante für gelochte Wendeschneidplatten vorbeschrieben, welche insbesondere für schmale Wendeschneidplatten geeignet sind.
Bei diesen Ausführungsformen werden für eine Spannstelle mehrere Einzelteile benötigt, so dass auch diese Ausführungsformen wiederum einen erhöhten Fertigungsaufwand erfordern.
In der DE 31 14 460 C2 wird die Bauform eines rotierenden Schneidwerkzeuges mit Wendeschneidplatten vorbeschrieben, wobei die im Wendeschneidplattenhalter aufgenommenen Schneidplatten jedoch nur eine geringe Schneidenlänge aufweisen.
In der WO 95/29 026 A1 wird nun vorgeschlagen die Wendeschneidplatte mittels Präzisionsführungssitzen zu befestigen, d.h. mit jeweils "drei" trapezförmigen, parallel zueinander verlaufenden Rillen zu versehen und diese auf "drei" zugeordneten, ebenfalls nebeneinander angeordneten trapezförmigen Rippen einer Halteroberfläche derart aufzuspannen, dass zwischen den ineinanderpassenden Rillen und Rippen ein Keileffekt entsteht, wobei im Bereich der miteinander und nebeneinander verspannten Rillen und Rippen zwischen der Unterseite des Schneideinsatzes und der Oberfläche des Halters stets ein Freiraum verbleiben muss.
In der WO 97/11 806 A1 (Inhaber identisch mit dem von WO 95/29 026 A1) wird der erfindungsgemäße Gedanke der WO 95/29 026 A1, gemäß dem die Schneidplatte ausschließlich nur auf den trapezförmigen Rippen des Halters aufgespannt wird, dergestalt erweitert, dass die analog zu WO 95/29 026 A1 aufgebauten trapezförmigen Rippen wiederum die Schneidplatte exakt positionieren sollen, doch wird gemäß der Lösung nach WO 97/11 806 A1 nun ein zweiter Teil der Schneidplatte auf eine ebene Fläche des Halters aufgepresst, wobei zwischen der Unterseite des Schneideinsatzes und der Oberfläche des Halters sowohl im Bereich der Befestigungsbohrung wie auch im Bereich zwischen den trapezförmigen Präzisionsführungssitzen, den Rippen, Freiräume verbleiben. Dabei erfordert die Herstellung dieser keilförmigen Präzisionsführungssitze stets einem sehr hohen Fertigungsaufwand und ermöglicht dennoch nur, dass auf diesen keilförmigen Präzisionsführungssitze stets nur eine Schneidplatte verspannt werden kann, so dass auch mittels der vorgenannten Lösungen keinesfalls "lange Schneiden" realisiert werden können. Ein weiterer nicht zu unterschätzender Nachteil der beiden vorgenannten Lösungen ist zudem, dass bei Temperaturänderungen, da der Wärmeausdehnungskoeffizient der Schneidplatten bei ca. 50% des Wärmeausdehnungskoeffizienten von Stahl liegt, sehr hohe Wärmespannungen auftreten.

Alle bisher genannten Anordnungen von Schneidplatten haben dabei den Nachteil, dass sie einerseits nur eine relativ geringe Schneidenlänge aufweisen, bzw. dass andererseits bei Einsatz von Schneidplatten mit größeren Schneidenlängen, - wie sie beispielsweise bei Stahlwollemessern eingesetzt werden - , Schwingungen auftreten in deren Folge eine Beschädigung bzw. Zerstörung der eingespannten Schneidplatte eintritt.
Aus der DE 100 43 015 C2 ist darüber hinaus ein Zerspanungswerkzeug mit direkter Schneidplattenanlage, insbesondere zur Fräsbearbeitung oder zur bohrenden Werkstücksbearbeitung bekannt, welches sich im wesentlichen dadurch auszeichnet, dass die mit rückwandigen Schneidplattenanlagen versehenen Schneidplatten wie herkömmliche Werkzeugzähne, als komplette Einheit "Zahn" am Umfang des Fräswerkzeuges, in unter jeweils einem unterschiedlichen Winkel zur Mittenachse über- bzw. nebeneinander und zudem zueinander versetzt angeordneten Schneidplattensitzen derart kraftschlüssig mit dem Werkzeuggrundkörper verbunden sind, dass die einander benachbarten Schneidplatten mit ihren Kanten infolge ihrer gemäß DE 100 43 015 C2 (zwingend erforderlichen) angeschrägten Seitenflächen derart übereinander zu liegen kommen, dass nach dem kraftschlüssigen Verspannen der Schneidplatten auf dem Werkzeuggrundkörper sich die Schneidkanten benachbarter, sich gegenseitig abstützender Schneidplatten einander überschneiden. Auch diese Lösung gemäß der DE 100 43 015 C2 erfordert wiederum eine sehr kostenintensiven Fertigung insbesondere zur Herstellung der jeweils unter einem unterschiedlichen Tangentenwinkel über- und nebeneinander, sowie zueinander versetzt angeordneten Schneidplatten(sitz)ebenen, wie aber auch zur Herstellung der jeweils diesen zugeordneten rückseitigen Schneidplattenanlageflächen.
In der WO 01 08 839 A1 wird nun ein Schneidkopf für eine industrielle Holzbearbeitungsmaschine mit einer Vielzahl von spiralförmig um den Schneidkopf umlaufenden Rillen vorgestellt, welche jeweils von einer Vielzahl dreieckiger, mit jeweils einer Befestigungsbohrung versehenen Schneidplattenmontageräumen gebildet werden.
In den Schneidplattenmontageräumen sind Schneidplatten verspannt die mit jeweils zwei rückwandseitig angeordneten Anlageflächen versehen sind.
Die Herstellung der Schneidplattensitze gemäß der WO 01 08 839 A1 erfordert einerseits sehr hohe Fertigungskosten und lässt dabei andererseits zwangsläufig nur den Einsatz von Schneidplatten mit nur jeweils einer einzigen Schneide zu, d.h. der Einsatz von Wendeschneidplatten ist bei dieser Lösung nicht möglich.
Zudem führt die bei dieser Lösung gewählte Verspannung der Schneidplatten, da jede Schneidplatte für sich allein verspannt ist, im Zerspanungsprozess zu relativ großen Schwingungsamplituden an den Schneiden.

Der Erfindung liegt daher die Aufgabe zugrunde eine Anordnung und eine Befestigung von Schneidplatten zu entwickeln, die selbst für Werkzeuge mit großen Schneidenlängen geeignet ist, dabei eine optimale schnelle und gleichzeitig fertigungstechnisch einfache Verspannung der Schneidplatte mit dem Werkzeuggrundkörper ermöglicht, gleichzeitig stets einen schnellen, einfachen und kostengünstigen Austausch von verschlissenen Schneidplatten gewährleistet, zudem die durch den Schneid- bzw. Zerspanungsprozeß bedingten Schwingungen deutlich reduziert und gleichzeitig die Lebensdauer der Schneidplatte insgesamt wie auch die auf die Schneidenlänge bezogene Standzeit deutlich erhöht und zudem die Herstellungs- und Instandhaltungskosten der Schneidwerkzeuge merklich senkt.

Erfindungsgemäß wird diese Aufgabe mittels einer Anordnung und Befestigung von Schneidplatten (1) nach dem Hauptanspruch der vorliegenden Erfindung gelöst.

Die erfindungsgemäße Anordnung und Befestigung von Schneidplatten (1) auf einem Werkzeuggrundkörper (2) mit einerseits in den zu befestigenden Schneidplatten (1) angeordneten Nuten (8) und andererseits in den zu befestigenden Schneidplatten (1) angeordneten, sich zur Oberfläche (3) der Schneidplatte (1) hin etwa kegelförmig (mit einem konvexen (balligen) Kegelmantel) erweiternden Befestigungsbohrungen (19), wobei die am Werkzeuggrundkörper (2) zu befestigenden Schneidplatten (1) mittels in den Befestigungsbohrungen (19) angeordneten Senkkopfschrauben (12) am Werkzeuggrundkörper (2) verspannt werden, zeichnet sich dabei dadurch aus, dass die am Werkzeuggrundkörper (2) angeordnete/n Werkzeugschneide/n (5) jeweils von den Schneiden (6) mehrerer, nebeneinander auf einer gemeinsamen Auflagefläche (9) des Werkzeuggrundkörpers (2) angeordneten Schneidplatten (1) gebildet wird/werden, wobei parallel zur Schneide (6), im Bereich der Befestigungsbohrung (19), in der Bodenfläche (7) jeder Schneidplatte (1) jeweils eine Nut (8) bzw. beidseitig der Befestigungsbohrung (19) am Rand der Schneidplatte (1) Nutsegmente (8A) angeordnet ist/sind, und am Werkzeuggrundkörper (2) auf der zugeordneten gemeinsamen Auflagefläche (9) der Schneidplatte/n (1) eine der Nut (8) / den Nutsegmenten (8A) zugeordnete, in ihrer Breite / Tiefe und Höhe gegenüber der Nutbreite /Nuttiefe und Nuthöhe der Schneidplatte/n (1) jedoch ein Arbeitsspiel aufweisende Führungsschiene (10) bzw. Führungsschienenabschnitte (10A) angeordnet ist / sind, wobei in dieser Führungsschiene (10) bzw. zwischen den Führungsschienenabschnitten (10A) Gewindebohrungen (11) derart beabstandet nebeneinander angeordnet sind, dass die auf der Auflagefläche (9) mittels ihrer Nuten (8) / Nutsegmenten (8A) entlang der Führungsschiene (10) / Führungsschienenabschnitten (10A) mit einem Arbeitsspiel am Werkzeuggrundkörper (2) grob positionierten Schneidplatten (1), mit Hilfe von den in den Befestigungsbohrungen (19) der Schneidplatten (1) angeordneten Senkkopfschrauben (12) derart verspannt werden, dass einerseits die Bodenfläche/n (7) der Schneidplatte/n (1) gegen die gemeinsame Auflagefläche (9) verspannt, dabei gleichzeitig die der Werkzeugschneide (5) zugewandte/n Wandung/en (13) der Nut bzw. der Nutsegmente der jeweiligen Schneidplatte (1) gegen die dieser/diesen benachbarten Stegwandung/en (14) der Führungsschiene (10) bzw. der Führungsschienenabschnitte (10A) des Werkzeuggrundkörpers (2) angepresst und zugleich die Seitenwangen (15) der einander benachbarten Schneidplatten (1) unter einem Kraftangriffswinkel (α) miteinander verspannt werden.
Infolge dieser erfindungsgemäßen Anordnung wird gewährleistet, dass selbst für Werkzeuge mit großen Schneidenlängen eine optimale schnelle und gleichzeitig fertigungstechnisch einfache Verspannung der einzelnen Schneidplatte mit dem Werkzeuggrundkörper derart möglich, dass die zusammengesetzte Werkzeugschneide stets exakt zueinander verspannt werden kann, wobei gleichzeitig ein schneller, einfacher und kostengünstiger Austausch von verschlissenen Schneidplatten gewährleistet ist.
Infolge dieser erfindungsgemäßen Anordnung ist neben einer hohen Schneidenstabilität auch problemlos ein Austausch der Schneidplatten untereinander infolge der konstanten Zuordnung des Abstandsmaßes von der Nut (8) bzw. dem/den Nutsegment/en (8A) zur Schneidkante möglich.
Ein wesentliches Merkmal der Erfindung ist in diesem Zusammenhang auch, dass beim Verspannen der Senkkopfschrauben (12) in den kegelförmigen, mit einem konvexen (balligen) Kegelmantel versehenen Ausweitungen (4) der Befestigungsbohrungen (19) die Schneidplatten (1) mit der der Werkzeugschneide (5) zugewandten Wandung/en (13) der Nut bzw. des Nutsegmentes gegen die dieser/diesen benachbarten Stegwandung/en (14) der Führungsschiene (10) bzw. der Führungsschienenabschnitte (10A) des Werkzeuggrundkörpers (2) angepresst, und die Seitenwangen (15) der einander benachbarten Schneidplatten (1) unter einem vorgegebenen Kraftangriffswinkel ( 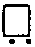 miteinander verspannt werden.
Vorteilhaft ist dabei, wenn der Kraftangriffswinkel (α) unter dem die Anpresskraft gegen die Seitenwange (15) der unmittelbar benachbarten Schneidplatte 1 wirkt vorzugsweise ca. 30° gegenüber der Seitenwange (15) beträgt.
Diese erfindungsgemäße Verspannung der Schneidplatten (1) mit ihren der Werkzeugschneide (5) zugewandten Wandung/en (13) der Nut bzw. des Nutsegmentes gegen die der/den Wandung/en (13) der Nut bzw. des Nutsegmentes benachbarten Stegwandung/en (14) der Führungsschiene (10) bzw. der Führungsschienenabschnitte (10A) des Werkzeuggrundkörpers (2) und der gleichzeitigen Verspannung die Seitenwangen (15) der einander benachbarten Schneidplatten (1) unter einem Kraftangriffswinkel (α) von vorzugsweise 30° miteinander gewährleistet eine exakte und sichere Positionierung der Schneidplattenreihe am Werkzeuggrundkörper (2).
Kennzeichnend ist dabei, dass die Schneidplatten (1) entlang ihrer kürzeren Seitenlängen mit einer bzw. zwei Schneiden (6) versehen sind, und entlang ihrer größeren Seitenlängen, den Seitenwangen (15) aneinander liegen.
Vorteilhaft ist in diesem Zusammenhang, wenn die größere Seitenlänge der Seitenwangen (15) die jeweils kürzeren Seitenlänge der Schneiden (6) um mindestens ca. 30% überragen.
Dadurch wird auch die seitliche Anlage der Schneidplatten (1) untereinander deutlich erhöht und die Stabilität der gesamten Werkzeugschneide (5) wesentlich verbessert.
Durch die erfindungsgemäße Gliederung der Schneide in voneinander unabhängige, erfindungsgemäß miteinander und mit dem Werkzeuggrundkörper (2) exakt verspannte Schneidplatten (1), werden die durch den Schneid- bzw. Zerspanungsprozeß bedingten Kräfte optimal auf den Werkzeuggrundkörper übertragen und zudem gleichzeitig die beim Schneid- bzw. Zerspanungsprozess auftretenden Schwingungen deutlich reduziert, so dass die Lebensdauer der einzelnen Schneidplatten (1) gegenüber der Lebensdauer einer durchgängigen, nicht in Schneidplatten (1) gegliederten Werkzeugschneide (5) deutlich erhöht wird.
Zudem können aber auch beispielsweise die in einen Bereich der Werkzeugschneide (5) beschädigten Schneidplatten (1) gegen nicht beschädigte Schneidplatten (1) ausgetauscht werden, so dass bei Einsatz der erfindungsgemäßen Lösung nicht mehr die gesamte Werkzeugschneide ersetzt werden muss.
Hieraus resultiert eine wesentliche weitere Kosteneinsparung, zumal oftmals die Werkzeugschneiden, beispielsweise bei Messern zur Stahlwolleherstellung unterschiedlich stark verschleißen.
Dieser unterschiedliche Verschleiß der Messer für die Stahlwolleherstellung resultiert unter anderem aus dem unterschiedlichen Aufschwingen der nebeneinander laufenden, abzutragenden Drähte, aber auch dem unterschiedlichen Verschleiß der Führungen bzw. den zulässigen Toleranzen in den Drahtführungen, wie auch aus einem unterschiedlichen Verschmutzungsgrad der einzelnen Drahtführungen, bzw. der jeweiligen Lage der Drahtführung in der Fertigungslinie.
Aufgrund der erfindungsgemäßen Lösung können nun weniger verschlissenen Schneidplatten (1) länger im Einsatz bleiben, d.h. müssen erst später ausgetauscht werden.
Durch die erfindungsgemäße Lösung wird somit die auf die Schneidenlänge bezogene Standzeit deutlich erhöht und auch die Herstellungs- und Instandhaltungskosten der mit den erfindungsgemäßen Schneidplatten (1) versehenen Schneidwerkzeuge merklich gesenkt.
Erfindungsgemäß ist aber auch, dass die in der Bodenfläche 7) der Schneidplatte (1) angeordnete Nut (8) / Nutsegmente (8A) mittig oder außermittig angeordnet sein kann/können.
Mit solchen Schneidplatten (1) mit außermittig, "versetzt" angeordneter Nut (8)/angeordneten Nutsegmente (8A) kann man einerseits gerade Werkzeugschneiden (5) aufbauen, aber andererseits auch durch Nebeneinanderanordnen der Schneidplatten (1) und Drehen jeder, jeder zweiten, usw. Schneidplatte (1) um jeweils 180° (und deren Kombinationen) einen in der Variantenvielfalt sehr großen, aber exakt definierten Versatz der einander benachbarten Schneidplatten (1) erzielen, so dass mittels dieser "um 180° gedrehten" Anordnung einer beliebigen Anzahl von Schneidplatten (1) mit außermittig angeordneter Nut (8) / angeordneten Nutsegmenten (8A) zwei unterschiedliche Schnitttiefen - mittels Vorschneiden (23) und Spaltschneiden (24) - über beliebig lange Werkzeugschneidenabschnitte mit optimalen Schneid- bzw. Zerspanungsbedingungen realisiert werden können.
Mit der erfindungsgemäßen Lösung ist es somit zudem erstmals möglich selbst derartig versetzte Werkzeugschneiden sehr einfach und kostengünstig herzustellen, um mit derartig versetzten Werkzeugschneidengeometrien beispielsweise ein definiertes Gemisch von grobem, mittleren und feinem Schnittgut zu erzielen, welches auf Grund seiner höheren Rieselfähigkeit unter anderem auch beim Verbrennen in Müllverbrennungsanlagen und/oder Heizwerken gegenüber dem Schnittgut mit gleichartiger Körnung wesentlich besser geeignet ist.
Erfindungswesentlich ist weiterhin, dass an den Seitenwangen (15) der Schneidplatte (1) ein feines Profil, oder auch eine raue geschliffene Oberfläche angeordnet ist.
Diese Profilierung, bzw. diese raue geschliffene Oberfläche an den Seitenfläche bewirkt einerseits einen erhöhten Reibwert und damit eine sichere Positionierung der Schneidplatten (1) zueinander, wie gleichzeitig auch eine weitere Verbesserung der Schwingungsdämpfung und dadurch eine weitere Standzeiterhöhung des gesamten Werkzeugschneide.
Kennzeichnend ist auch, dass die Schneidplatte (1) mit ihren parallel zur Schneide (6) verlaufenden Nuten (8) / Nutsegmenten (8A) mittels der Senkkopfschrauben (12) so gegeneinander verspannt sind, dass die beiden mittig sitzenden Schneidplatte (1) gegeneinander gedrückt werden und jeder weitere, weiter seitlich sitzende Schneidplatte (1) in Richtung Mitte der Werkzeugschneide (5) gedrückt wird.
Diese erfindungsgemäße, gegenseitige Verspannung der Schneidplatten (1) untereinander, von beiden Seiten der Werkzeugschneide (5) zur Mitte hin, optimiert die schwingungsdämpfenden Eigenschaften der Werkzeugschneide und erhöht dadurch nochmals deren Standzeit.

Ein weiteres Merkmal der Erfindung ist, dass die Schneidplatten (1) aus legiertem Stahl, aus Hartmetall, oder aus hochlegiertem pulvermetallurgisch hergestellten Stahl o.ä. bestehen.
Erfindungswesentlich ist in diesem Zusammenhang auch, dass vorteilhafter Weise auf der Oberfläche (3) der Schneidplatte (1) im Bereich der Schneide (6) Rillenprofile eingearbeitet sind, die eine hohe Schneidhaltigkeit gewährleisten.
Kennzeichnend ist in diesem Zusammenhang auch, dass bei den aus Hartmetall bzw. aus hochlegiertem pulvermetallurgisch hergestellten Stahl gefertigten Rillenprofilen der Außenradius (R1) des auf der Oberfläche (3) der Schneidplatte (1) eingearbeiteten Rillenprofils (17) größer als der Innenradius (R2) ist.
Schneidplatten (1) aus hochlegiertem pulvermetallurgisch hergestellten Stahl werden beispielsweise bei der Verarbeitung von Stählen eingesetzt, die nur mit niedrigen Schnittgeschwindigkeiten bearbeitet werden können.
Durch die erfindungsgemäße Ausführung, bei der der Außenradius (R1) an der Spitze des Rillenprofils wesentlich größer ist als Innenradius (R2) ist wird es beim Pressen dieser mit Rillenprofil versehenen Schneidplatte (1) möglich, größere Korngrößen beim Pressen zu verwenden.
Diese größeren Korngrößen sind rieselfähiger und lassen sich beim automatischen Verpressen besser zuführen.
Zudem dringt der kleinere Innenradius (R2) an der Spitze des Presswerkzeuges leichter in die Pulvermasse ein, trägt gleichzeitig zu einer gleichmäßigeren Verteilung der Pulvermasse im Nutgrund bei.
Ein weiteres Merkmal der Erfindung ist in diesem Zusammenhang auch, dass die Beabstandung der Rillen des Rillenprofils, die Teilung (T) über die Breite der Werkzeugschneide (5), aber auch innerhalb einer Schneidenplatte (1) ungleichmäßig sein kann.
Eine solche erfindungsgemäß ungleiche Teilung (T) bei unmittelbar hintereinander angeordneten Messerabschnitte bewirkt beispielsweise bei der Herstellung von Stahlwolle, dass bei den am Messerbalken hintereinander angeordneten Messern nicht das nachfolgende Profil in die von vorhergehenden Profil erzeugte Rillung am Draht, dem Werkstück, eingreift.
Dadurch wird einerseits eine bessere und zugleich gleichmäßigere Qualität der so hergestellten Stahlwolle gewährleistet, aber andererseits werden auch Störungen im Produktionsprozess (z.B. beim Ablegen der Stahlwolle auf Ballen) deutlich reduziert.
Vorteilhaft ist weiterhin, wenn die Schneidplatten (1) als Wendeschneidplatten mit zwei gegenüberliegenden Schneiden (6) ausgeführt sind.
Diese als Wendeschneidplatten ausgeführten Schneidplatten (1) ermöglichen, dass selbst die an einer der beiden Schneiden (6) verschlissenen Schneidplatten (1) infolge der erfindungsgemäßen Verspannung nochmals entlang der jeweiligen Werkzeugschneide (5) mit der nicht verschlissenen Schneide (6) neu ausgerichtet und eingesetzt werden können.
Zudem ermöglicht die erfindungsgemäße Ausführung als Wendeschneidplatten nicht nur eine Verdopplung der Standzeit der einzelnen Schneidplatten (1) sondern auch, dass selbst unterschiedliche Rillenprofile, wie beispielsweise verschiedene Größen von Rillenprofilen und/oder unterschiedliche Rillenneigungen (ψ) gegenüber der Schneide, für die unterschiedlichsten Einsatzfälle an den beiden gegenüberliegenden Schneiden (6) einer Schneidplatte (1) angeordnet werden können.
Die auswechselbare Anordnung der erfindungsgemäßen Schneidplatten (1) ermöglicht somit auch, dass längs einer Werkzeugschneide (5) nebeneinander Schneidplatten (1) mit verschiedenen Schneiden (6), z.B. verschiedenen Größen eines Rillenprofils (17) usw., angeordnet werden können.
So kann beispielsweise bei einem erfindungsgemäß ausgebildeten Messer zur Herstellung von Stahlwolle an einem Messerschneidenrand mit der feinsten Teilung beginnend, sich diese über die einzelnen Schneidplatten zum anderen Messerschneidenrand hin erhöhen, so dass mit einem Messer unterschiedlich feine Stahlwolle in einer Fraktion hergestellt werden kann.
Zudem werden nicht nur die Kombinationsmöglichkeiten bei der Herstellung der Stahlwolle durch die Nebeneinanderanordnung unterschiedlicher Profilgrößen deutlich erhöht, sondern insbesondere durch eine Minimierung der prozessbedingten Stillstandszeiten gleichzeitig die Produktionskapazität der gesamten Anlage wesentlich erhöht.
Vorteilhaft ist auch, wenn die erfindungsgemäßen Schneidplatten (1) aus Hartmetall bestehen, da sich derartige Schneidplatten automatisch herstellen, d.h. sowohl automatisch pressen wie auch automatisch schleifen lassen.
Zudem können so problemlos unterschiedliche, für den jeweiligen Einsatzfall optimale Hartmetallsorten ausgewählt werden.
Erfindungswesentlich ist auch, dass bei den Schneidplatten zur Herstellung von Stahlwolle der Flankenneigungswinkel (β) des Rillenprofils vorzugsweise 60° beträgt.
Dieser Flankenneigungswinkel (β) von 60° erzielt bei der Herstellung von Stahlwolle erfindungsgemäß überraschender Weise die beste und zudem die gleichmäßigste Stahlwollequalität.
Ein weiteres Merkmal der Erfindung besteht darin, dass bei den erfindungsgemäßen Schneidplatten (1) mit nur einer Schneide (6), aber auch bei den als Wendeschneidplatten ausgebildeten erfindungsgemäßen Schneidplatten (1) an den jeweiligen Schneide/n (6) eine Hartstoffschicht angeordnet ist. Durch diese Hartstoffbeschichtung wird auch eine Standzeiterhöhungen des Rillenprofils, insbesondere bei hohen Schnittgeschwindigkeiten erzielt.
Erfindungswesentlich ist auch, dass der Werkzeuggrundkörper (2) mindestens an der Auflagefläche (9) der Schneidplatte (1) eine wärmeleitende Beschichtung (18) trägt. Vorzugsweise besteht diese Beschichtung (18) aus Kupfer.
Diese wärmeleitende Schicht, z.B. die Kupferschicht dient einer optimalen Wärmeableitung von den Schneidenplatten (1) in den Werkzeuggrundkörper (2). Infolge einer solch optimierten Wärmeableitung wird die Klebeneigung an der Schneide (6) insbesondere bei der Bearbeitung von rostfreien Werkstoffen wesentlich reduziert.

Erfindungsgemäß ist, dass bei ausschließlich nebeneinander angeordneten Schneidplatten (1) die Anzahl der miteinander verspannten Schneidplatten (1) vorzugsweise geradzahlig ist.
Infolge dieser Geradzahligkeit der miteinander verspannten Schneidplatten wird ein gleichmäßiger Druckaufbau von beiden Seiten zur Mitte der Werkzeugschneide (5) hin erzielt, so dass insbesondere bei geringen Werkzeugbreiten dadurch eine gleichmäßige Verspannung aller Schneidplatten (1) gewährleistet ist.
Erfindungsgemäß ist aber auch, dass bei "Schneidzähnen" beispielsweise von Recycling- und/oder Aufbereitungsmaschinen entlang jeder Zahnflanke (20) die Schneidplatten (1) untereinander, und im Bereich der Zahnspitze (21) auch die unmittelbar benachbarten Schneidplatten (1) der beiden Zahnflanken (20) miteinander verspannt sind, wobei die Zahnfläche (25) zwischen den Schneidplatten (1) der beiden Zahnflanken (20) mit Wolframcarbid-Pulver gepanzert ist, und die Materialflussrichtung (26) der Aufpanzerung in Richtung der Zahnspitze (21) erfolgt.
Dadurch können sowohl die Werkzeugkosten wie gleichzeitig auch die Fertigungskosten zur Herstellung der "Schneidzähnen" optimiert, die Standzeit der Zahnschneiden wesentlich erhöht und darüber hinaus eine optimale kostengünstige Instandhaltung der Werkzeugschneiden des erfindungsgemäßen Zahnes gewährleistet, sowie der Verschleiß der Zahnfläche (25) zwischen den Zahnflanken (20) minimiert werden.
In diesem Zusammenhang ist es erfindungsgemäß, wenn bei den unter einem Winkel zueinander verspannten Schneidplattenreihen, beispielsweise bei den Zahnflanken (20) von Schneidzähnen, die Anzahl der in einer Reihe hintereinander angeordneten Schneidplatten (1) ungeradzahlig ist.
Dadurch wird es beispielsweise möglich, dass zur Zahnspitze hin eine gleichgerichtete Verspannung der Schneidplattenreihen erfolgt, so dass durch diese Verspannung der Schneidplatten (1) hin zur Zahnspitze (21) hin auch die an der Zahnspitze (21) angeordneten Schneidplatten (1) eine besonders hohe Stabilität erhalten.
Kennzeichnend ist aber auch, dass auf der Schneidplatte (1) eine, oder gegenüberliegend zwei mit jeweils einer Schneide (6) versehene Hartstoffleisten (22) eingelötet oder eingeklebt ist/ sind.
Kennzeichnend ist weiterhin, dass auch diese Hartstoffleisten (22) mit einem Rillenprofil (21) versehen sind.
Durch die erfindungsgemäße Anordnung derartiger Hartstoffleisten (22) auf der/den Schneidplatte/n (1) können bei verschiedenen Einsatzfällen unter Nutzung der erfindungsgemäßen, bereits erläuterten vorteilhaften Wirkungen die Werkzeugkosten der Schneidplatten (1) nochmals deutlich reduziert werden.
Weitere Einzelheiten und Merkmale der Erfindung ergeben sich aus den Unteransprüchen sowie der nachfolgenden Beschreibung der erfindungsgemäßen Ausführungsbeispiele in Verbindung mit den Zeichnungen zur erfindungsgemäßen Lösung.

Nachfolgend soll die Erfindung nun an Hand mehrerer Ausführungsbeispiele in Verbindung mit dreiundzwanzig Figuren näher erläutert werden. Die möglichen Realisierungsformen der Erfindung sind jedoch nicht auf diese nachfolgend vorgestellten Ausführungsbeispiele begrenzt.

Es zeigen dabei:
- Figur 1 :: ein erfindungsgemäß aufgebautes Messer zur Herstellung von Stahlwolle in der Draufsicht;
- Figur 2 :: den Schnitt bei A-A gemäß Figur 1;
- Figur 3 :: die Einzelheit "X" aus Figur 2;
- Figur 4 :: einen Teilschnitt durch das Rillenprofil 17 gemäß Figur 3 einer zur Herstellung von Stahlwolle eingesetzten Schneidplatte 1;
- Figur 5 :: eine erfindungsgemäß aufgebaute Werkzeugschneide 5 eines Handschabers;
- Figur 6 :: die Draufsicht auf einen mit Schneidplatten 1 bestückten Werkzeuggrundkörper 2, im vorliegenden Fall eine mit Wendeplatten bestückte Schneidleiste einer Recyclinganlage;
- Figur 7 :: die Draufsicht auf eine Werkzeugschneide 5 einer Recycling- und Aufbereitungsmaschine mit in der Tiefe versetzt angeordneten Schneidplatten 1;
- Figur 8 :: die Vorderansicht eines "Schneidzahnes" mit von Schneidplatten 1 gebildeten Zahnflanken 20 und einer zwischen den Zahnflanken 20 liegenden mit Wolframkarbid-Pulver gepanzerten Zahnfläche 25;
- Figur 9 :: die Draufsicht auf eine mögliche Ausführungsform des Schneidzahnes aus Figur 8 mit gerader Zahnflanke 20;
- Figur 10 :: die Draufsicht auf die andere Zahnflanke des Schneidzahnes aus Figur 8 in einer weiteren möglichen Ausführungsform, und zwar mit entlang jeder Zahnflanke 20 in der Tiefe versetzt angeordneten Schneidplatten 1;
- Figur 11 :: die Seitenansicht eines vierarmigen, mit Schneidplattenreihen besetzten, beidseitig schneidenden Schermessers für Biomassen;
- Figur 12 :: die Draufsicht auf eine Schneidplattenreihe des beidseitig schneidenden Schermessers für Biomassen aus Figur 11;
- Figur 13 :: die Draufsicht auf die Schneidplattenreihen eines ähnlich Figur 11 gestalteten Schermessers für Biomassen mit jedoch seitlich abwechselnd angeordneten Werkzeugschneiden 5;
- Figur 14 :: die Seitenansicht eines zweiarmigen, mit Schneidplattenreihen besetzten, einseitig schneidenden Schermessers für Biomassen;
- Figur 15 :: Schnitt bei A-A gemäß Figur 14;
- Figur 16 :: die Draufsicht auf die Schneidplattenreihen des zweiarmigen, einseitig schneidenden Schermessers für Biomassen gemäß Figur 14;
- Figur 17 :: Draufsicht auf die Werkzeugschneide 5 einer Schneidleiste für Biomassen mit auf den erfindungsgemäß angeordneten Schneidplatten 1 einseitig eingelöteten Hartstoffleisten 22;
- Figur 18 :: Teilschnitt bei A-A, gemäß Figur 17, durch die Schneidleiste für Biomassen mit einseitig eingelöteter Hartstoffleiste 22;
- Figur 19 :: Teilschnitt durch eine Schneidplatte 1 mit beidseitig eingeklebten Hartstoffleisten 22;
- Figur 20 :: Draufsicht auf den Ausschnitt einer Werkzeugschneide 5 aus Schneidplatten 1 mit beidseitig angeordneten Hartstoffleisten 22 und senkrecht zur Schneide 6 angeordnetem Rillenprofil 17;
- Figur 21 :: ist eine mögliche weitere Ausführungsform der auf Schneidplatten 1 anzuordnenden Hartstoffleisten 22 mit parallel zur Schneide 6 angeordnetem Rillenprofil 17;
- Figur 22 :: eine mögliche weitere Ausführungsform der auf Schneidplatten 1 anzuordnenden Hartstoffleisten 22 mit schräg zur Schneide 6 angeordnetem Rillenprofil 17;
- Figur 23 :: eine mögliche weitere Ausführungsform der auf Schneidplatten 1 anzuordnenden Hartstoffleisten 22 mit kreuzweise zur Schneide 6 angeordnetem Rillenprofil 17.

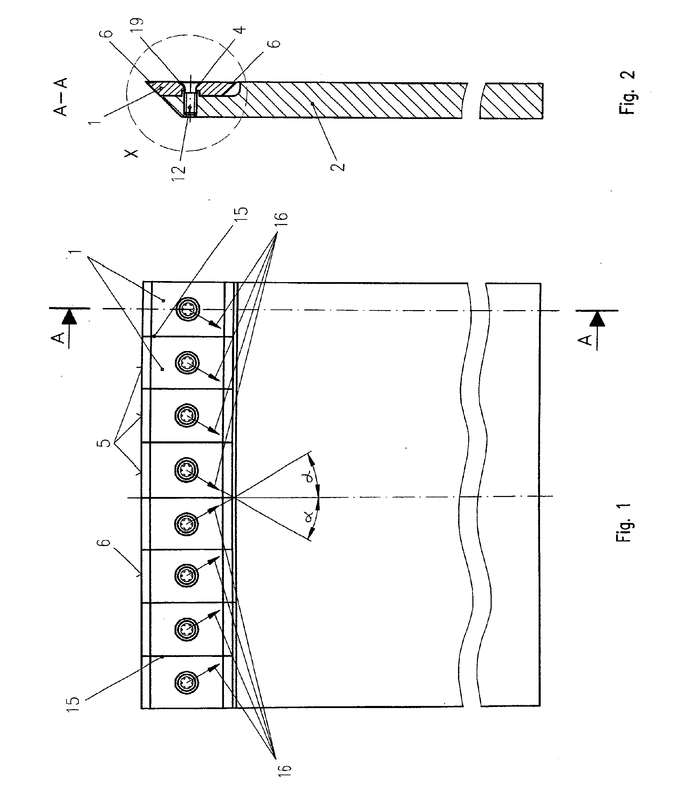

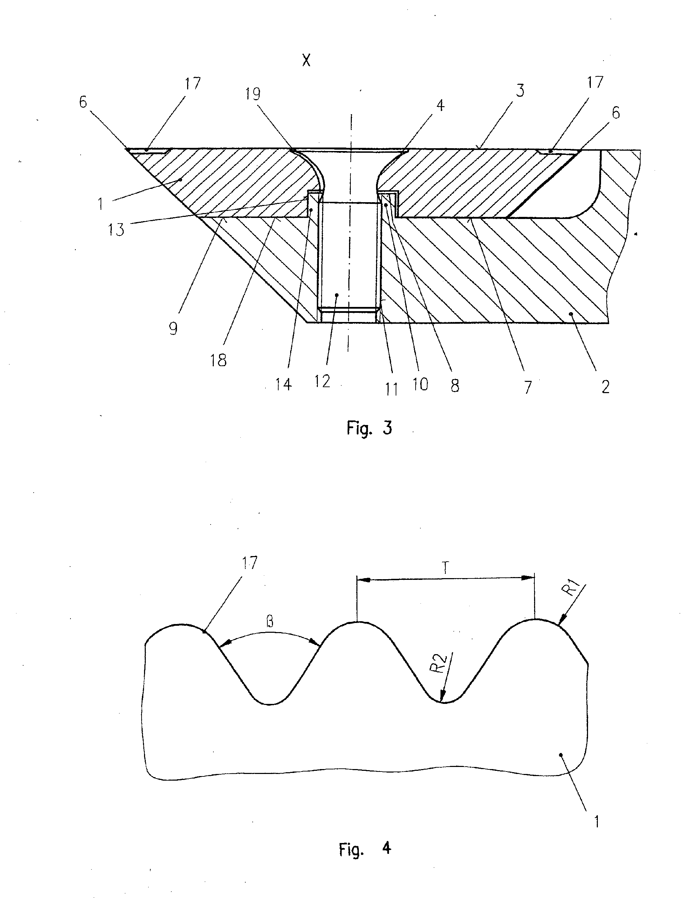

In der Figur 1 ist ein erfindungsgemäß aufgebautes Messer zur Herstellung von Stahlwolle in der Draufsicht dargestellt, wobei die Figur 2 den zugehörigen Schnitt bei A-A zeigt, und in der Figur 3 die Einzelheit X aus Figur 2 dargestellt ist.
Gemäß dieser Darstellungen sind auf einem Werkzeuggrundkörper 2 acht Schneidplatten 1 erfindungsgemäß verspannt. In jeder dieser Schneidplatten 1 ist eine Befestigungsbohrung 19 mit einer sich zur Oberfläche 3 hin erweiternden, kegelförmigen, am jeweiligen Kegelmantel balligen Ausweitungen 4 angeordnet. Die Werkzeugschneide 5 selbst wird von den Schneiden 6 der acht Schneidplatte 1 gebildet, in deren Bodenfläche 7 jeweils eine Nut 8 angeordnet ist.
Auf der Auflagefläche 9 der Schneidplatte 1 ist am Werkzeuggrundkörper 2 eine zugeordnete in ihrer Breite gegenüber Breite der Nut 8 ein Arbeitsspiel aufweisende Führungsschienen 10 angeordnet.
In der Führungsschiene 10 sind Gewindebohrungen 11 derart angeordnet, dass mittels der Senkkopfschrauben 12 die auf der Führungsschiene 10 mit ihren Nuten 8 aufgesetzten Schneidplatten 1, wie aus Figur 2 ersichtlich, auf dem Werkzeuggrundkörper 2 so aufgeschraubt werden, dass mittels der Senkkopfschrauben 12 einerseits eine Wandung 13 der Nut der Schneidplatte 1 gegen eine Stegwandung 14 des Werkzeuggrundkörpers 2 und zugleich die Seitenwange 15 dieser Schneidplatte 1 unter einem Kraftangriffswinkel α gegen die Seitenwange 15 der unmittelbar benachbarten Schneidplatte 1 gedrückt wird.
Der Kraftangriffswinkel α unter dem die Anpresskraft gegen die Seitenwange 15 der unmittelbar benachbarten Schneidplatte 1 wirkt beträgt dabei ca. 30° gegenüber der Seitenwange 15.
Diese erfindungsgemäße Anpressung unter dem Winkel α von ca. 30° bringt den Vorteil, dass die Schneidplatten 1 sowohl sicher gegen den Steg des Werkzeuggrundkörpers 2 wie auch gleichzeitig sicher seitlich gegen die Seitenwange 15 der benachbarten Schneidplatte 1 gedrückt wird.
Die Schneidplatten 1 mit ihren parallel zur Schneide 6 verlaufenden Nutn 8 werden dabei auf der am Werkzeuggrundkörpers 2 angeordneten Führungsschiene 10 mittels der Senkkopfschrauben 12 so verspannt sind, dass die beiden mittig sitzenden Schneidplatte 1 gegeneinander gedrückt werden und jede weitere, weiter seitlich sitzende Schneidplatte 1 in Richtung Mitte der Werkzeugschneide 5 gepresst wird.
Diese gegenseitige Verspannung der einzelnen Schneidplatten 1 von beiden Seiten zur Mitte hin wirkt zudem schwingungsdämpfend und erhöht nochmals die Standzeit.
Insbesondere bei geringen Werkzeugbreiten ist es vorteilhaft, dass die Anzahl der miteinander verspannten, nebeneinander angeordneten Schneidplatten 1 geradzahlig ist.
Infolge dieser Geradzahligkeit der miteinander verspannten Schneidplattenten wird ein gleichmäßiger Druck von beiden Seiten zur Mitte hin erzielt, wodurch selbst bei geringen Werkzeugbreiten eine gleichmäßige Verspannung aller Schneidplatten 1 unter- und miteinander erreicht wird.
Die mit jeweils einer Befestigungsbohrung versehenen Schneidplatten 1 sind dabei stets entlang ihrer kürzeren Seitenlängen mit Schneiden 6 versehen.
Entlang ihrer größeren Seitenlängen, den Seitenwangen 15 liegen die erfindungsgemäßen Schneidplatten 1 stets aneinander.
Vorteilhaft ist es, wenn dabei die größeren Seitenlängen der Seitenwangen 15 die jeweils kürzeren Seitenlängen der Schneiden 6 um mindestens 30% überragen. Eine derartige erfindungsgemäße Ausführung, mit um mindestens 30% längeren Seitenwangen verbessert die seitliche Anlage der Schneidplatten 1 und erhöht dadurch die Stabilität des gesamten Messers.
Vorteilhaft ist auch, wenn an den Seitenwangen 15 der Schneidplatten 1 ein feines Profil oder eine raue, beispielsweise geschliffene Oberfläche angeordnet ist. Diese Profilierung, bzw. die raue Oberfläche an den Seitenwangen 15 der Schneidplatten 1 bewirkt einen erhöhten Reibwert und damit eine sichere Positionierung der Schneidplatten 1 zueinander, wie auch eine weitere Verbesserung der Schwingungsdampfung und somit eine gleichzeitige weitere Standzeiterhöhung der gesamten Werkzeugschneide.
Infolge der erfindungsgemäßen Anordnung und Befestigung von Schneidplatten 1 wird auch für Werkzeuge mit großen Schneidenlängen eine optimale schnelle und gleichzeitig fertigungstechnisch einfache Verspannung der einzelnen Schneidplatte mit dem Werkzeuggrundkörper ermöglicht, so dass die erfindungsgemäß zusammengesetzte Werkzeugschneide kostengünstig sehr exakt entlang der "Schneidenlinie" der Werkzeugschneide 5 verspannt werden kann.
Darüber hinaus ist Infolge dieser erfindungsgemäße Anordnung ein schneller, einfacher und kostengünstiger Austausch von verschlissenen Schneidplatten aufgrund der konstanten Zuordnung des Abstandsmaßes von der Nut zur Schneidkante problemlos möglich, so dass bei Beschädigungen einzelner Schneidplatten 1 der Werkzeugschneide 5 nur die beschädigten Schneidplatten 1 der Werkzeugschneide 5 ersetzt werden müssen.
Auch hieraus resultiert eine weitere wesentliche Kosteneinsparung, zumal die einzelnen Abschnitte der Werkzeugschneide 5 oftmals unterschiedlich stark verschleißen.
Die Gründe für den unterschiedlichen Verschleiß, beispielsweise bei den Messern zur Stahlwolleherstellung, resultieren unter anderem aus den unterschiedlichen Schwingungen der nebeneinander laufenden, bei der Stahlwolleherstellung abzutragenden Drähte, den unterschiedlichen Führungen bzw. Toleranzen in den Drahtführungen, aber auch aus dem unterschiedlichen Verschmutzungsgrad der einzelnen Drahtführungen, wie auch der jeweiligen Lage der Drahtführung in der Fertigungslinie.
Meist verschleißen die am Außenrand des Messers angeordneten Schneidplatten 1 weniger stark als die zur Messermitte hin angeordneten Schneidplatten 1, wodurch die weniger verschlissenen Schneidplatten 1 länger im Einsatz bleiben können, d.h. erst später ausgetauscht werden müssen.
Beispielsweise auch dadurch wird die auf die Schneidenlänge bezogene Standzeit deutlich erhöht und dabei die Herstellungs- und Instandhaltungskosten der mit Schneidplatten versehenen Schneidwerkzeuge merklich gesenkt.
Durch die Gliederung der Schneide in voneinander unabhängige, miteinander verspannte Schneidplatten werden zudem gleichzeitig auch die durch den Schneid- bzw. Zerspanungsprozess bedingten Schwingungen deutlich reduziert, wodurch die Lebensdauer der aus einzelnen Schneidplatten 1 zusammengesetzten Werkzeugschneide 5 gegenüber einer durchgängigen Werkzeugschneide deutlich erhöht wird.
Auf der Oberfläche 3 der Schneidplatten 1 sind, wie in der Figur 3 dargestellt, Rillenprofile 17 eingearbeitet. Diese Rillenprofile 17 verlaufen senkrecht zur Schneide 6 und gewährleisten die eine hohe Schneidhaltigkeit der Werkzeugschneide.
Wie in den Figuren 1 bis 3 weiterhin dargestellt, können die Schneidplatten 1 vorteilhafter Weise als Wendeplatten mit jeweils zwei Schneiden 5 ausgeführt sein.
Diese Ausführung als Wendeplatte ermöglicht einerseits eine Verdopplung der Standzeit der Schneidplatten 1 und ermöglicht aber gleichzeitig auch, dass verschiedene Größen von Rillenprofilen 17 für unterschiedliche Stahlwollequalitäten an einer Schneidplatte 1 angeordnet sein können.
Wie ebenfalls aus der Figur 3 ersichtlich, ist an der Auflagefläche 9 der Schneidplatte 1 eine wärmeleitende Beschichtung 18 aus Kupfer angeordnet.
Diese wärmeleitende Kupferschicht dient einer optimalen Ableitung der im Zerspanungsprozess entstehenden Wärme von den Schneidenplatten 1 in den Werkzeuggrundkörper 2.
Dadurch wird die Klebeneigung an der Schneide 6 insbesondere bei der Bearbeitung von rostfreien Werkstoffen wesentlich reduziert und die Standzeit infolge des "nicht Anklebens" von Stahlpartikeln deutlich erhöht.
Die Figur 4 zeigt nun einen Teilschnitt durch das Rillenprofil 17einer zur Herstellung von Stahlwolle eingesetzten Schneidplatte 1 aus Hartmetall, gemäß Figur 3. Derartige Schneidplatten aus Hartmetall lassen sich automatisch herstellen, d.h. sowohl automatisch pressen wie auch automatisch schleifen.
Der äußere Radius R1 des auf der Oberfläche der Schneidplatte 1 eingearbeiteten Rillenprofils 17 ist dabei größer ist als der innere Radius R2.
Infolge dessen wird beim Pressen dieser mit einem Rillenprofil versehenen Schneidplatten1 gewährleistet, dass auch größere Korngröße beim Pressen verwendet werden können. Diese sind rieselfähiger und lassen sich beim automatischen Verpressen besser zuführen.
Der an der Spitze des Presswerkzeuges angeordnete kleinere Radius R2 dringt dabei leichter in die Pulvermasse ein, und trägt so zu einer gleichmäßigeren Verteilung im Nutgrund bei.
Ein Merkmal der Erfindung ist in diesem Zusammenhang auch, dass die Beabstandung der Rillen des Rillenprofils, die Teilung T über die Breite der Werkzeugschneide 5, aber auch über die Schneide 6 innerhalb einer Schneidenplatte 1 ungleichmäßig sein kann.
Erfindungswesentlich ist in diesem Zusammenhang, dass bei den Schneidplatten zur Herstellung von Stahlwolle der Flankenneigungswinkel β des Rillenprofils 60° beträgt.
Dieser erfindungsgemäße Flankenneigungswinkel β von 60° erzielt bei der Herstellung von Stahlwolle überraschender Weise die beste und vor allem gleichmäßigste Stahlwollequalität.

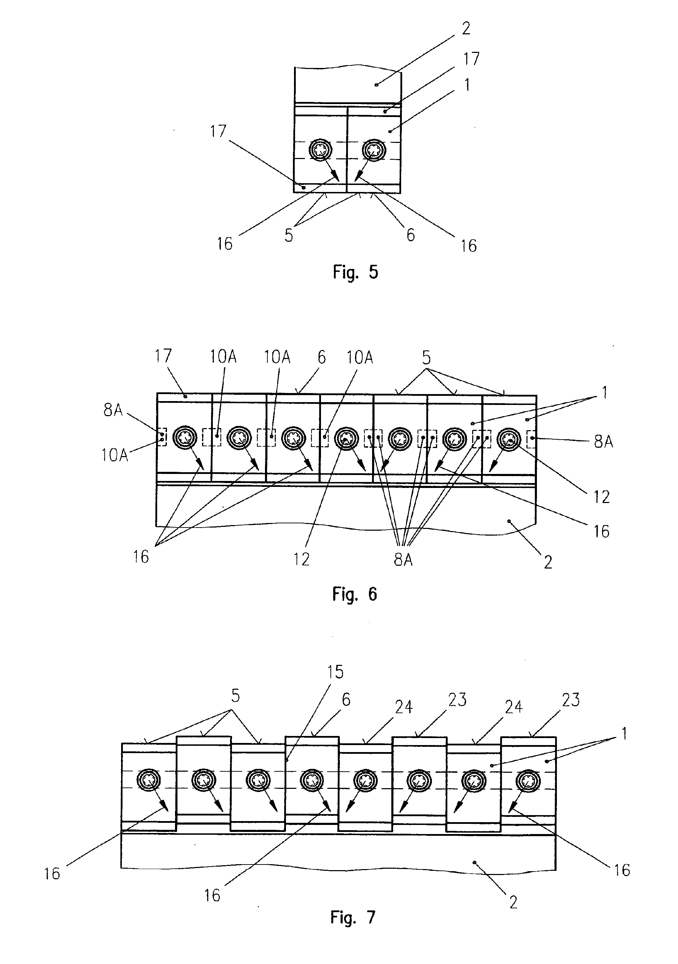

In der Figur 5 ist nun die erfindungsgemäße Werkzeugschneide 5 an einem Handschaber angeordnet.
Derartige Ausführungsform findet vorwiegend Anwendung in der Bauindustrie wie aber auch im Heimwerkerbereich als Schaber für Farbresten oder andere Verunreinigungen, beispielsweise auch dann wenn beim Einsatz eines Hochdruckreinigers hartnäckig verschmutzte Stellen nicht sauber werden oder einen erhöhten Zeitaufwand und/oder Wasserverbrauch erfordern.
Derartige Schaber ermöglichen eine leichte Bauweise und können einerseits mit einem Handgriff versehen, oder mit Adapter auf einem Schwinggerät angeordnet, bzw. mit einem Hochdruckreiniger kombiniert werden.
Die Figur 6 zeigt nun eine die Draufsicht auf einen mit Schneidplatten 1 bestückten Werkzeuggrundkörper 2, im vorliegenden Fall eine mit sieben Wendeplatten unsymmetrisch bestückte Schneidleiste einer Recyclinganlage.
Die hierbei als Wendeplatten ausgebildete Schneidplatten 1 sind mit parallel zur jeweiligen Schneide 6, beidseitig der Befestigungsbohrung am Rand der Schneidplatte 1 in der Bodenfläche angeordneten Nutsegmenten 8A versehen.
Auf der zugeordneten gemeinsamen Auflagefläche der Schneidplatten 1 sind am Werkzeuggrundkörper 2, den Nutsegmenten 8A zugeordnete, in ihrer Breite / Tiefe und Höhe gegenüber der Nutbreite / Nuttiefe und Nuthöhe der Schneidplatte/n 1 jedoch ein Arbeitsspiel aufweisende Führungsschienenabschnitte 10A angeordnet
Zwischen den Führungsschienenabschnitten 10A sind Gewindebohrungen derart beabstandet nebeneinander angeordnet, dass die auf der Auflagefläche mittels ihrer Nutsegmente 8A entlang der Führungsschienenabschnitten 10A mit einem Arbeitsspiel am Werkzeuggrundkörper grob positionierten Schneidplatten 1, mit Hilfe von den in den Befestigungsbohrungen der Schneidplatten 1 angeordneten Senkkopfschrauben 12 derart verspannt werden, dass einerseits die Bodenflächen der Schneidplatten 1 gegen die gemeinsame Auflagefläche verspannt, gleichzeitig die der jeweiligen Werkzeugschneide 5 zugewandten Wandungen des Nutsegmentes der jeweiligen Schneidplatte 1 gegen die dieser benachbarten Stegwandungen der Führungsschienenabschnitte 10A des Werkzeuggrundkörpers 2 angepresst und dabei gleichzeitig die Seitenwangen der einander benachbarten Schneidplatten 1 miteinander verspannt werden.
Die hierbei eingesetzten Schneidplatten bestehen beispielsweise aus einem hochlegierten pulvermetallurgisch hergestellten Stahl.
Die Standzeiten dieser feststehenden Schneidleisten, welche zur Zeit durch den Einsatz von Sicherheitsschaltungen, wie beispielsweise einem schnellen Zurückgefahren der feststehenden Leiste (z.B. dann wenn sich, ein größeres Stück Stahl in einem gepressten Kunststoffballen befindet) erhöht werden, können mittels der erfindungsgemäßen Bestückung der Schneidleiste mit Schneidplatten 1 nochmals wesentlich gesteigert werden, da u.a. (wie bereits in Verbindung mit dem Messer zur Herstellung von Stahlwolle erläutert) nicht mehr die gesamte Schneidleiste bei Beschädigungen ersetzt werden muss.
In der Figur 7 ist die Draufsicht auf eine Werkzeugschneide 5 einer Recycling- und Aufbereitungsmaschine mit in der Tiefe versetzt angeordneten Schneidplatten 1 dargestellt. Bei den hierbei eingesetzten Schneidplatten 1 ist die Nut 8 mit der zugehörigen Befestigungsbohrung 19 ebenfalls parallel zur Schneide 6 jedoch außermittig versetzt angeordnet. Durch Drehen der Schneidplatten 1 beim Nebeneinanderanordnen um jeweils 180° erhält man durch die erfindungsgemäße Lösung einen exakt definierten Versatz zwischen der Vorschneide 23 und der Spaltschneide 24, so dass mittels der erfindungsgemäßen Anordnung der Schneidplatten 1 mit außermittig angeordneter Nut 8 zwei unterschiedliche Schnitttiefen erzielt werden können, um beispielsweise definiert ein Gemisch von grobem und feinem Schnittgut zu erzielen, welches beispielsweise beim Verbrennen in Müllverbrennungsanlagen und/oder Heizwerken gegenüber dem in der Körnung gleichartigem Schnittgut u.a. wesentlich rieselfähiger, aber auch luftdurchlässiger und daher besser geeignet ist.

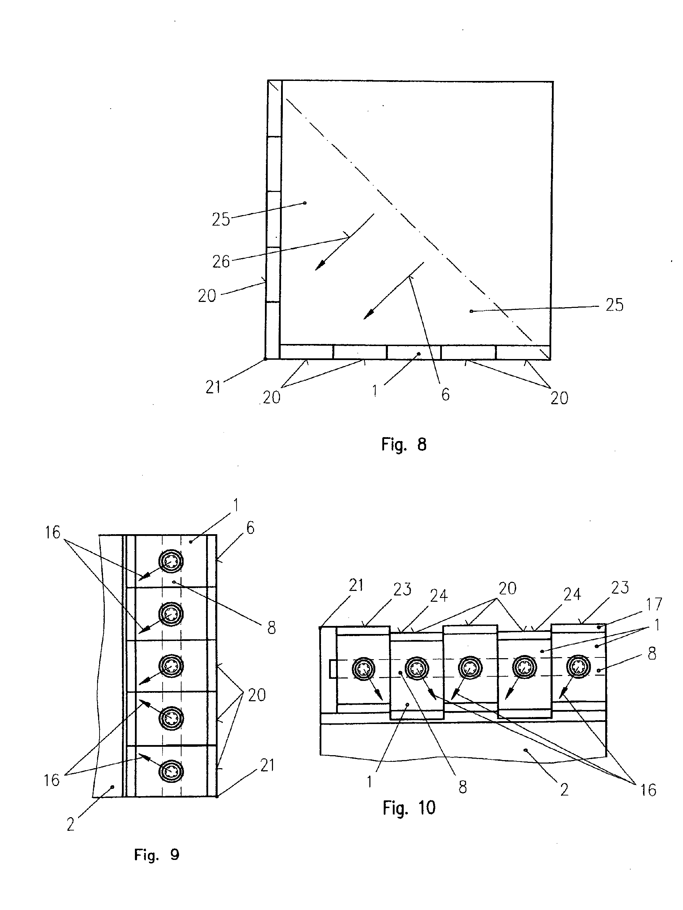

Die Figur 8 zeigt die Vorderansicht eines "Schneidzahnes". Derartige Schneidzähne sind auf Rotoren von Recycling- und Aufbereitungsmaschinen angeordnet die sich sind auch mit Drehzahlen von 200 U/min bis 4000 U/min drehen. Unter Beachtung der beim Zerkleinerungsprozess entstehenden Wärme werden die Lagerspiele größer gewählt, woraus zwangsläufig erhöhte Schwingungen mit einer erhöhten Beanspruchung und einem sich daraus ergebenden erhöhten Verschleiß der Schneidzähne resultieren.
Erfindungsgemäß werden daher die Schneidplatten "hochkant" angeordnet. Diese erfindungsgemäße Anordnung mit stirnseitiger, frontaler Beanspruchung ermöglicht eine höhere Belastbarkeit wie auch eine aus dieser Anordnung resultierende höhere Stabilität mit einer damit in Verbindung stehenden geringeren Bruchgefahr und bietet somit an den Flanken der Stirnseite der Schneidzähne einen sehr hohen Verschleißschutz.
Die beiden Zahnflanken 20 werden dabei von jeweils fünf miteinander verspannten Schneidplatten 1 gebildeten. Die zwischen diesen Zahnflanken 20 liegenden Zahnfläche 25 ist mit Wolframcarbid-Pulver in Richtung der Zahnspitze 21 aufgepanzert damit die Form der Aufpanzerung beim Recycling eine zusätzliche "reißende" Wirkung hat und gleichzeitig der Verschleiß der Zahnfläche 25 zwischen den Zahnflanken 20 minimiert wird.
Durch die hier vorgestellten Lösung werden sowohl die Kosten des Werkzeugmaterials wie auch die Fertigungskosten zur Herstellung der Schneidzähne deutlich reduziert, gleichzeitig die Standzeit der Zahnschneiden wesentlich erhöht und darüber hinaus eine optimale und gleichzeitig kostengünstige Instandhaltung der Zahnschneiden gewährleistet.
Vorteilhaft ist es, wenn wie in diesem Ausführungsbeispiel dargestellt, die Anzahl der Schneidplatten 1 der in Reihe miteinander unter einem Winkel verspannten Schneidplatten 1 entlang einer Zahnflanke 20 ungeradzahlig ist.
Dadurch wird gewährleistet, dass in "Summe" eine gleichmäßige Verspannung der Schneidplattenreihen untereinander erfolgt.
In der Figur 9 ist nun die Draufsicht auf eine der möglichen Ausführungsformen der Zahnflanke des Schneidzahnes aus Figur 8, beispielsweise mit gerader Zahnflanke 20 und mittig in den Schneidplatten 1 angeordneten Nuten 8 dargestellt, wobei die an der Zahnspitze 21 angeordneten Schneidplatten 1 nach innen verspannt sind, um in Verbindung mit den bei diesen Zerkleinerungsmaschinen auftretenden hohen Fliehkräften eine hohe Stabilität der Zahnspitze zu gewährleisten.
Die Figur 10 zeigt demgegenüber die Draufsicht auf die andere ebenfalls erfindungsgemäß mögliche Ausführungsform der Zahnflanke des Schneidzahnes aus Figur 8, und zwar mit entlang jeder Zahnflanke 20 in der Tiefe versetzt angeordneten Schneidplatten 1, unter in diesem Ausführungsbeispiel abwechselnder Verwendung jeweils einer Schneidplatte 1 mit mittig angeordneter, und einer Schneidplatte 1 mit außermittig angeordneter Nut 8.

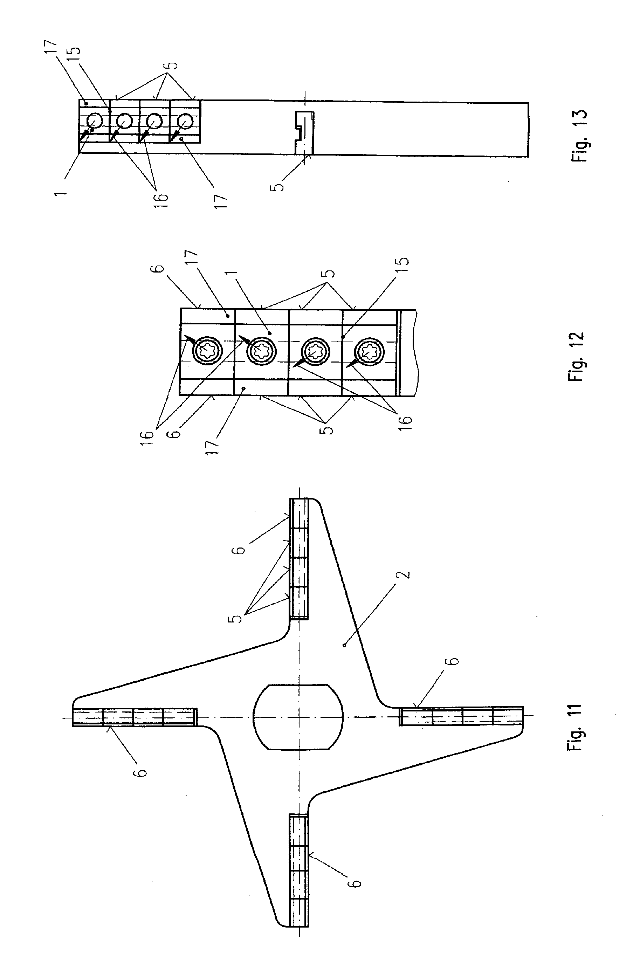

In der Figur 11 ist die Seitenansicht eines vierarmigen, mit Schneidplattenreihen besetzten, beidseitig schneidenden Schermessers für Biomassen dargestellt. Da dieses Schermessers zwischen zwei Lochscheiben arbeitet, d.h. dass beide einander gegenüberliegende Schneiden stets gleichzeitig in Einsatz sind, weist die Verspannung der Schneidplatten 1 an den Führungsschienen des Werkzeuggrundkörpers 2 eine Besonderheit auf, welche jedoch ebenfalls erfindungswesentlich ist und sich dadurch auszeichnet, dass die Schneidplatten 1 abwechselnd oder bereichsweise mit einer der jeweiligen Werkzeugschneide 5 zugewandte Wandung 13 der Nut gegen die jeweils benachbarte Stegwandung 14 des Werkzeuggrundkörpers 2 angepresst, und die Seitenwangen 15 der einander benachbarten Schneidplatten 1 unter einem vorgegebenen Kraftangriffswinkel α miteinander verspannt sind.
Die Figur 12 zeigt nun in der Draufsicht eine der beidseitig schneidenden Schneidplattenreihe mit einer bereichsweisen (hier paarweisen) Verspannung der Wandungen der Nuten der Schneidplatten 1 mit jeweils einer der beiden Stegwandungen des Werkzeuggrundkörpers.
In der Figur 13 ist die Draufsicht auf die Schneidplattenreihen eines ähnlich der Figur 11 ausgebildeten Schermessers für Biomassen, jedoch mit seitlich abwechselnd angeordneten Werkzeugschneiden 5 dargestellt, so dass bei dieser Ausführungsform welche ebenfalls zwischen zwei Lochscheiben arbeitet, stets eine Werkzeugschneide 5 zum Einsatz kommt. Die Schneidplatten 1 sind daher erfindungsgemäß mit den Wandungen ihrer Nuten gegen die der jeweiligen Werkzeugschneide 5 zugewandten, den Wandungen der Nuten benachbarten Stegwandung des Werkzeuggrundkörpers 2 angepresst.
Dabei sind die Seitenwangen 15 der einander benachbarten Schneidplatten 1 unter einem Kraftangriffswinkel miteinander gleichzeitig nach außen verspannt.

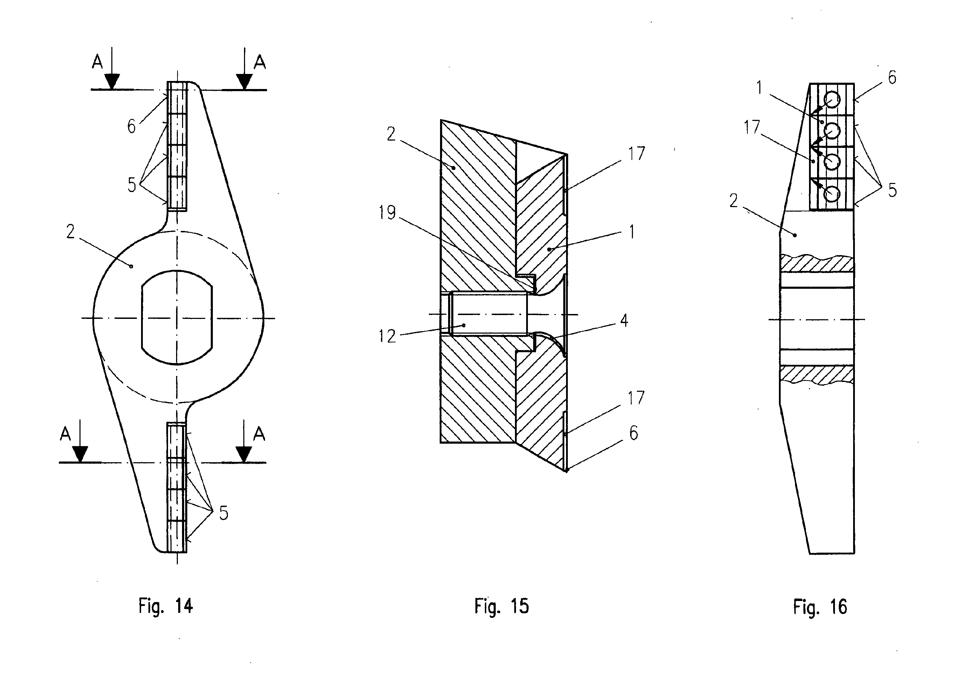

Die Figur 14 zeigt nun die Seitenansicht eines zweiarmigen, mit Schneidplattenreihen besetzten, einseitig schneidenden Schermessers für Biomassen welches an einer der Lochscheibe arbeitet.
In der Figur 15 ist nun der Schnitt bei A-A durch eine der Schneiden des zweiarmigen, mit Schneidplattenreihen besetzten, einseitig schneidenden Schermessers für Biomassen gemäß Figur 14 dargestellt.
Die Figur 16 zeigt die Draufsicht auf die Schneidplattenreihen des zweiarmigen, einseitig schneidenden Schermessers für Biomassen gemäß Figur 14 mit paarweise unter einem Kraftangriffswinkel gegeneinander verspannten Schneidplatten 1.

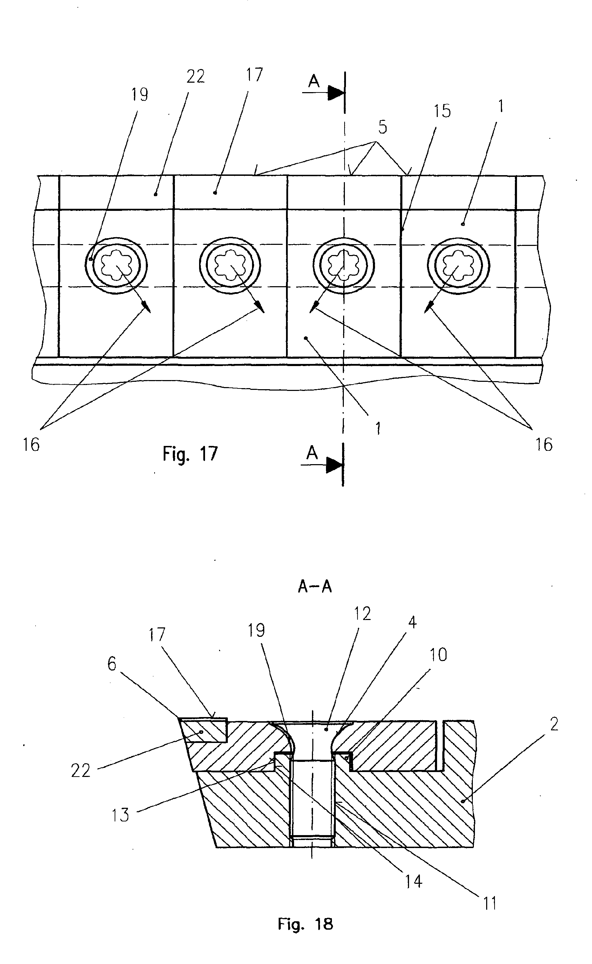

In der Figur 17 ist die Draufsicht auf die Werkzeugschneide 5 einer Schneidleiste für Biomassen mit auf den erfindungsgemäß angeordneten Schneidplatten 1 einseitig eingelöteten Hartstoffleisten 22 dargestellt.
Durch den Einsatz solcher mit Hartstoffleisten 22 versehenen Schneidplatten 1 können unter bestimmten Einsatzbedingungen bei für den jeweiligen Einsatzfall ausreichender Standfestigkeit der Werkzeugschneide die Werkzeugkosten zur Herstellung der Schneidplatten 1 nochmals deutlich gesenkt werden
Bei Beschädigungen der Schneidengeometrie können analog den bisherigen Erläuterungen zu den vorangegangenen Ausführungsbeispielen auch bei dieser Ausführungsform der erfindungsgemäßen Lösung dann die mit Hartstoffleisten 22 versehenen Schneidplatten 1 ausgewechselt werden.

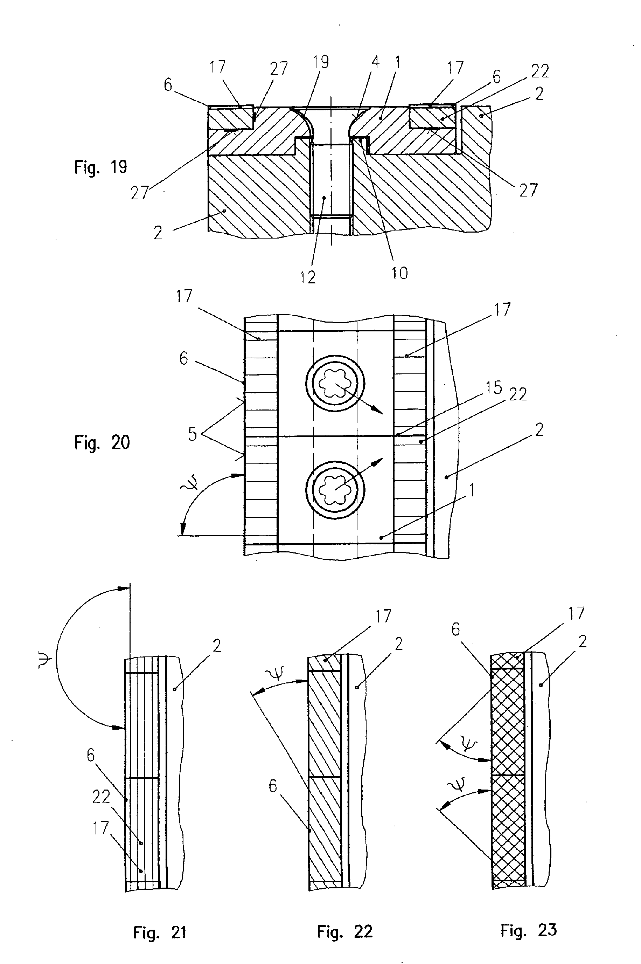

Die Figur 18 zeigt den Teilschnitt bei A-A, gemäß Figur 17, durch die dort dargestellte Schneidleiste für Biomassen mit einer einseitig eingelöteten Hartstoffleiste 22 und einem in dieser Hartstoffleiste 22 angeordnetem Rillenprofil 17.
In der Figur 19 ist nun ein Teilschnitt durch eine als Wendeplatte einsetzbare Schneidplatte 1 mit beidseitig eingeklebten Hartstoffleisten 22 dargestellt.
Zur Verklebung sind entsprechend den jeweils zu erwartenden Schneidenbeanspruchungen entweder nur an der Auflagefläche, oder aber sowohl an der Auflagefläche wie auch an der Anlagefläche der Hartstoffleiste 22 in der Schneidplatte 1 Klebernuten 27 eingebracht in denen der jeweils Anwendung findende Klebstoff angeordnet wird.
Da gegenüber einer Lötverbindung wie aber auch gegenüber einer vollflächigen Klebeverbindung eine derartige mit Klebernuten 27 versehene stoffschlüssige Verbindung den direkten Kontakt, und damit die direkte Kraftübertragung von der Hartstoffleiste 22 in die Schneidplatte 1 gewährleistet, werden durch diese Lösung elastische Verformungen des Lotes bzw. des Klebers vermieden und zwangsläufig die daraus resultierenden Beschädigungen der Hartstoffleiste 22 ausgeschlossen.
Die Figur 20 zeigt die Draufsicht auf den Ausschnitt einer Werkzeugschneide 5 aus Schneidplatten 1 mit beidseitig angeordneten Hartstoffleisten 22 und senkrecht zur Schneide 6 in den Hartstoffleisten 22 angeordnetem Rillenprofil 17. Durch dieses senkrecht zur Schneide 6 angeordnete Rillenprofil mit einem Rillenneigungswinkel ψ von 90° wird bei langspanenden Werkstoffen wie z.B. bei Cu, Mg, Al und deren Legierungen ein gesicherter Spanbruch erreicht.

In der Figur 21 ist eine mögliche weitere Ausführungsform der auf Schneidplatten 1 anzuordnenden Hartstoffleisten 22 mit parallel zur Schneide 6 angeordnetem Rillenprofil 17. Dieses parallel zur Schneide 6 angeordnete Rillenprofil 17 mit einem Rillenneigungswinkel ψ von 180° ist beispielsweise gut zur Zerkleinerung von Kartonagen unterschiedlicher Dicke geeignet.
Die Figur 22 zeigt eine mögliche weitere Ausführungsform der auf Schneidplatten 1 anzuordnenden Hartstoffleisten 22 mit schräg zur Schneide 6 angeordnetem Rillenprofil 17 mit einem Rillenneigungswinkel ψ von 30°.
Ein derartiges Rillenprofil 17 mit einem Rillenneigungswinkel ψ von 30° gegenüber der Schneide 6 ist beispielsweise sehr gut zur Stahlwolleherstellung geeignet, wobei im Rahmen der Stahlwolleherstellung bereits eine wesentlich geringere Rillenneigung eine Ablenkung vom Messerbalken zur Aufwickeleinrichtung gewährleistet, wodurch Störung bzw. Stillstandszeiten vermieden werden.
In der Figur 23 ist eine weitere mögliche Ausführungsform der auf Schneidplatten 1 anzuordnenden Hartstoffleisten 22 mit kreuzweise zur Schneide 6 angeordnetem Rillenprofil 17 mit jeweils einem Rillenneigungswinkel ψ von 45° gegenüber der Schneide 6.
Ein derartiges in der Figur 23 dargestelltes Rillenprofil 17 ist beispielsweise zur Zerkleinerung von unterschiedlichen Hölzern, aber auch zur Zerkleinerung von langfasrigen Hölzern und zudem auch zur Zerkleinerung von Spanplatten oder ähnlichen Werkstoffen sehr gut geeignet, da mittels einer derartigen Profilierung bei diesen Werkstoffen kleine Späne erzeugt werden wodurch einer "Verstopfung" der Anlage entgegengewirkt werden kann.
Mit der Erfindung ist es somit gelungen eine Anordnung und eine Befestigung von Schneidplatten zu entwickeln, die selbst für Werkzeuge mit großen Schneidenlängen geeignet ist, dabei eine optimale schnelle und gleichzeitig fertigungstechnisch einfache Verspannung der Schneidplatte mit dem Werkzeuggrundkörper ermöglicht und gleichzeitig stets einen schnellen, einfachen und kostengünstigen Austausch von verschlissenen Schneidplatten gewährleistet, zudem die durch den Schneid- bzw. Zerspanungsprozess bedingten Schwingungen deutlich reduziert, gleichzeitig die Lebensdauer der Schneidplatte insgesamt wie auch die auf die Schneidenlänge bezogene Standzeit nochmals deutlich erhöht und zudem die Herstellungs- und
Instandhaltungskosten der mit Schneidplatten versehenen Schneidwerkzeuge merklich senkt.

### Bezugszeichenzusammenstellung

- 1: Schneidplatte
- 2: Werkzeuggrundkörper
- 3: Oberfläche
- 4: Ausweitung
- 5: Werkzeugschneide
- 6: Schneide
- 7: Bodenfläche
- 8: Nut
- 8A: Nutsegmente
- 9: Auflagefläche
- 10: Führungsschiene
- 10A: Führungsschienenabschnitt
- 11: Gewindebohrung
- 12: Senkkopfschraube
- 13: Wandung
- 14: Stegwandung
- 15: Seitenwange
- 16: Kraftangriffsrichtung
- 17: Rillenprofil
- 18: Beschichtung
- 19: Befestigungsbohrung
- 20: Zahnflanke
- 21: Zahnspitze
- 22: Hartstoffleiste
- 23: Vorschneide
- 24: Spaltschneide
- 25: Zahnfläche
- 26: Materialflußrichtung
- 27: Klebernut

- T: Teilung
- α: Kraftangriffswinkel
- β: Flankenneigung
- ψ: Rillenneigungswinkel
- R1: Außenradius
- R2: Innenradius

## Patentansprüche

1. Anordnung und Befestigung von Schneidplatten (1) auf einem Werkzeuggrundkörper (2) mit einerseits in den zu befestigenden Schneidplatten (1) angeordneten Nuten (8) und andererseits in den zu befestigenden Schneidplatten (1) angeordneten, sich zur Oberfläche (3) der Schneidplatte (1) hin etwa kegelförmig (mit einem konvexen (balligen) Kegelmantel) erweiternden Befestigungsbohrungen (19), wobei die am Werkzeuggrundkörper (2) zu befestigenden Schneidplatten (1) mittels in den Befestigungsbohrungen (19) angeordneten Senkkopfschrauben (12) am Werkzeuggrundkörper (2) verspannt werden, **dadurch gekennzeichnet,**
- **dass** die am Werkzeuggrundkörper (2) angeordnete/n Werkzeugschneide/n (5) jeweils von den Schneiden (6) mehrerer, nebeneinander auf einer gemeinsamen Auflagefläche (9) des Werkzeuggrundkörpers (2) angeordneten Schneidplatten (1) gebildet wird/werden,
- **dass** parallel zur Schneide (6), im Bereich der Befestigungsbohrung (19), in der Bodenfläche (7) jeder Schneidplatte (1) jeweils eine Nut (8) bzw. beidseitig der Befestigungsbohrung (19) am Rand der Schneidplatte (1) Nutsegmente (8A) angeordnet ist/sind,
- **dass** am Werkzeuggrundkörper (2) auf der zugeordneten gemeinsamen Auflagefläche (9) der Schneidplatte/n (1) eine der Nut (8) / den Nutsegmenten (8A) zugeordnete, in ihrer Breite / Tiefe und Höhe gegenüber der Nutbreite / Nuttiefe und Nuthöhe der Schneidplatte/n (1) jedoch ein Arbeitsspiel aufweisende Führungsschiene (10) bzw. Führungsschienenabschnitte (10A) angeordnet ist / sind,
- **dass** in dieser Führungsschiene (10) bzw. zwischen den Führungsschienenabschnitten (10A) Gewindebohrungen (11) derart beabstandet nebeneinander angeordnet sind,
**dass** die auf der Auflagefläche (9) mittels ihrer Nuten (8) / Nutsegmenten (8A) entlang der Führungsschiene (10) /Führungsschienenabschnitten (10A) mit einem Arbeitsspiel am Werkzeuggrundkörper (2) grob positionierten Schneidplatten (1), mit Hilfe von den in den Befestigungsbohrungen (19) der Schneidplatten (1) angeordneten Senkkopfschrauben (12) derart verspannt werden, dass einerseits die Bodenfläche/n (7) der Schneidplatte/n (1) gegen die gemeinsame Auflagefläche (9) verspannt, gleichzeitig die der Werkzeugschneide (5) zugewandte/n Wandung/en (13) der Nut bzw. der Nutsegmente der jeweiligen Schneidplatte (1) gegen die dieser/diesen benachbarten Stegwandung/en (14) der Führungsschiene (10) bzw. der Führungsschienenabschnitte (10A) des Werkzeuggrundkörpers (2) angepresst und dabei gleichzeitig die Seitenwangen (15) der einander benachbarten Schneidplatten (1) unter einem Kraftangriffswinkel (α) miteinander verspannt werden.

2. Anordnung und Befestigung von Schneidplatten 1 nach Anspruch 1, **dadurch gekennzeichnet, dass** die Nut (8) / Nutsegmente (8A) mittig oder außermittig in der Bodenfläche (7) der Schneidplatte (1) angeordnet ist/sind.

3. Anordnung und Befestigung von Schneidplatten (1) nach Anspruch 1, **dadurch gekennzeichnet, dass** an den Seitenwangen (15) der Schneidplatte (1) eine raue, beispielsweise geschliffene Oberfläche, bzw. ein feines Profil angeordnet ist.

4. Anordnung und Befestigung von Schneidplatten (1) nach Anspruch 1, **dadurch gekennzeichnet, dass** die Schneidplatten (1) mittels der Senkkopfschrauben (12) so gegeneinander verspannt sind, dass die über die Werkzeugschneidenlänge etwa mittig sitzenden Schneidplatten (1) gegeneinander gedrückt werden und jede weitere, weiter seitlich angeordnete Schneidplatte (1) in Richtung zur Mitte der Werkzeugschneide (5) hin angepresst wird.

5. Anordnung und Befestigung von Schneidplatten 1 nach Anspruch 1, **dadurch gekennzeichnet, dass** die Schneidplatten (1) aus legiertem Stahl, aus Hartmetall, aus hochlegiertem pulvermetallurgisch hergestellten Stahl o.ä. bestehen.

6. Anordnung und Befestigung von Schneidplatten (1) nach Anspruch 1, **dadurch gekennzeichnet, dass** die Schneidplatten (1) als Wendeplatte mit zwei gegenüberliegenden Schneiden (6) ausgebildet sind.

7. Anordnung und Befestigung von Schneidplatten (1) nach Anspruch 1, **dadurch gekennzeichnet, dass** der Kraftangriffswinkel (α) unter dem die Seitenwange (15) der Schneidplatte 1 gegen die der unmittelbar benachbarten Schneidplatte (1) gedrückt wird ca. 30° beträgt.

8. Anordnung und Befestigung von Schneidplatten (1) nach Anspruch 1, **dadurch gekennzeichnet, dass** die Seitenlänge der Seitenwange (14) einer Schneidplatte (1) die Breite der Schneide (6) dieser Schneidplatte (1) überragt.

9. Anordnung und Befestigung von Schneidplatten (1) nach Anspruch 1, **dadurch gekennzeichnet, dass** der Werkzeuggrundkörper (1) mindestens an er Auflagefläche (9) der Schneidplatte (1) eine wärmeleitende Beschichtung (18) trägt.

10. Anordnung und Befestigung von Schneidplatten (1) nach Anspruch 1, **dadurch gekennzeichnet, dass** bei "Schneidzähnen" beispielsweise von Recycling- und/oder Aufbereitungsmaschinen entlang jeder Zahnflanke (20) die Schneidplatten (1) untereinander, und im Bereich der Zahnspitze (21) auch die unmittelbar benachbarten Schneidplatten (1) der beiden Zahnflanken (20) miteinander verspannt sind, wobei die Zahnfläche (25) zwischen den Schneidplatten (1) der beiden Zahnflanken (20) mit Wolframcarbit-Pulver gepanzert ist, und die Materialflussrichtung (26) der Aufpanzerung in Richtung der Zahnspitze (21) erfolgt.

11. Anordnung und Befestigung von Schneidplatten 1 nach Anspruch 1, **dadurch gekennzeichnet, dass** auf der Schneidplatte (1) eine, oder gegenüberliegend zwei mit jeweils einer Schneide (6) versehene Hartstoffleisten (22) eingelötet ist/ sind.

12. Anordnung und Befestigung von Schneidplatten (1) nach Anspruch 1, **dadurch gekennzeichnet, dass** auf der Schneidplatte (1) eine, oder gegenüberliegend zwei mit jeweils einer Schneide (6) versehene Hartstoffleisten (22) eingeklebt ist/ sind.

13. Anordnung und Befestigung von Schneidplatten (1) nach Anspruch 5, **dadurch gekennzeichnet, dass** auf der Oberfläche (3) der Schneidplatte (1) im Bereich der Schneide (6) Rillenprofile (17) eingearbeitet sind.

14. Anordnung zur Befestigung von Schneidplatten (1) nach Anspruch 5, **dadurch gekennzeichnet, dass** die Schneidplatte (1) an der/den Schneide/n 6 eine Hartstoffbeschichtung trägt.

15. Anordnung zur Befestigung von Schneidplatten (1) nach Anspruch 9, **dadurch gekennzeichnet, dass** die Beschichtung (18) vorwiegend aus Kupfer besteht.

16. Anordnung zur Befestigung von Schneidplatten (1) nach Anspruch 11 oder 12, **dadurch gekennzeichnet, dass** die Hartstoffleisten (22) mit einem Rillenprofil (17) versehen sind.

17. Anordnung und Befestigung von Schneidplatten (1) nach Anspruch 13 oder 16, **dadurch gekennzeichnet, dass** der Außenradius (R1) des auf der Oberfläche (3) der Schneidplatte (1) eingearbeiteten Rillenprofils (17) größer ist als der Innenradius (R2) ist.

18. Anordnung und Befestigung von Schneidplatten (1) nach Anspruch 13 oder 16, **dadurch gekennzeichnet, dass** die Beabstandung der Rillen des Rillenprofils, die Teilung (T) über die Breite der Werkzeugschneide (5) ungleichmäßig ist.

19. Anordnung und Befestigung von Schneidplatten (1) nach Anspruch 13 oder 16, **dadurch gekennzeichnet, dass** die Beabstandung der Rillen des Rillenprofils, die Teilung (T) innerhalb einer Schneidenplatte (1) ungleichmäßig ist.

20. Anordnung und Befestigung von Schneidplatten (1) nach Anspruch 13 oder 16, **dadurch gekennzeichnet, dass** der Flankenneigungswinkel (β) des Rillenprofils ca. 60° beträgt.
